# EUROPEAN PATENT SPECIFICATION

(11) **EP 2 998 617 B1**
(45) Date of publication and mention of the grant of the patent: **18.03.2020**
(21) Application number: 15183264.9
(22) Date of filing: 01.09.2015
(51) Int. Cl.: F16J 9/14, F16J 15/3272

(54) **A TOP PISTON RING FOR A LARGE TWO-STROKE TURBO-CHARGED UNIFLOW-SCAVENGED INTERNAL COMBUSTION ENGINE WITH CROSSHEADS**
OBERER KOLBENRING FÜR EINEN GROSSEN TURBOAUFGELADENEN UNIDIREKTIONAL FLUSSGESPÜLTEN ZWEITAKTVERBRENNUNGSMOTOR MIT KREUZKÖPFEN
SEGMENT DE PISTON SUPÉRIEUR POUR UN GRAND MOTEUR À COMBUSTION INTERNE TURBOCOMPRESSÉ DEUX TEMPS À RÉCUPÉRATION DE TYPE UNIFLOW

(30) Priority: 19.09.2014 DK 201400533
(43) Date of publication of application: 23.03.2016
(73) Proprietor: MAN Energy Solutions, filial af MAN Energy Solutions SE, Tyskland, 2450 Copenhagen SV (DK)
(72) Inventor: Petersen, Arne Kvistgaard, DK-2791 Dragoer (DK)
(74) Representative: Nordic Patent Service A/S

(56) References cited:
- EP-A1- 2 381 144
- DE-A1-102014 221 455
- FR-A1- 2 343 936
- GB-A- 748 677
- GB-A- 748 685
- GB-A- 895 787

## Description

### FIELD OF THE INVENTION

The present invention relates to a top piston ring for a large two-stroke turbo-charged uniflow-scavenged internal combustion engine with crossheads, in particular a top piston ring that is provided with a ring partition with engaging end portions to form a gas tight ring.

### BACKGROUND ART

Large two-stroke turbo-charged uniflow-scavenged engines with crossheads are typically used in propulsion systems of marine vessels or as prime mover in power plants. Typically, these engines are operated with heavy fuel oil or other inexpensive combustible product, or with gas.

The engine pistons are provided with a ring pack that seals against the combustion pressure in order to prevent combustion gases penetrating the scavenge space. In addition, the piston rings ensure the lubricating film is evenly distributed. The piston rings in the ring pack seal a piston oscillating at a speed of approximately 10 m/sec for an compressed air and combustion gasses at a pressure of around 250 bar pressure and a temperature of around 400 °C and using only a few drops of oil as lubrication, and all with an expected service life of many thousand hours. Therefore the main requirements for piston rings are high resistance to wear and corrosion and a low drop in elasticity at high temperatures.

Due to the aggressive nature of the combustion gases created when operating with heavy fuel oil, the inner walls of the cylinder liners are lubricated with a special cylinder lubrication oil that protects the inner walls of the cylinder liners from the aggressive components of the combustion gases. The provision of the cylinder lubrication and the size of the components involved, like pistons with diameter between 25 cm and 108 cm are the reason for the ring pack of a large two-stroke turbo-charge unit flow-scavenged engine to be different from ring pack in smaller four-stroke diesel engines.

The ring pack of a large two-stroke turbo-charged uniflow-scavenged engine with crossheads typically includes four piston rings with the top piston ring being a CPR ring, i.e. the top piston ring or the groove in the piston is provided with pressure relief grooves that allow for a well-defined and control flow of hot gas from the combustion chamber to the underside of the top piston ring thereby reducing the pressure drop over the top ring and distributing the load over several rings in the ring pack.

WO02070926 discloses a top piston ring that is provided with a ring partition. The ring partition is formed from engaging end portions on the ring body. One end portion is provided with a finger flush with the outer face and with the lower face of the top piston ring. The other end portion is provided with a recess opening to the outer face and to the lower face of the top piston ring. The finger slidingly engages the recess but the result is not gas tight, giving combustion gas free passage to the backside space between piston groove and piston ring. This flow of combustion gas is concentrated in the partition area, thereby heating up the finger. The finger is coolest at the contact face touching the cylinder liner. The resulting temperature gradient causes the finger to deform and cause hard contact between the tip of the finger and the cylinder liner. Excessive wear and failure of the finger can result, and may cause failure of the top piston ring.

EP2381144 discloses a sealing ring seal ring capable of stably leaking a sealed fluid from an inner peripheral face side. In the sealing ring an inter-side face leak passage connects a first space and a second space is provided to a fitted portion of a first protruding portion fitted in a second recessed portion and a fitted portion of a second protruding portion fitted in a first recessed portion, a passage communicating with an inner peripheral face side and with the inter-side face leak passage is formed when an end portion on an inner peripheral side of one cut end portion and an end portion on an inner peripheral side of the other cut end portion are in contact with each other.

### DISCLOSURE OF THE INVENTION

On this background, it is an object of the present application to provide a top piston ring that overcomes or at least reduces the problems indicated above.

This object is achieved by providing a top piston ring for use in a piston ring pack together with a plurality of lower piston rings in respective annular ring grooves in the side wall of a piston of a large two-stroke turbo charged uniflow-scavenged internal combustion engine with crossheads to seal against the pressure in the combustion chamber above the piston, the top piston ring comprising a ring body with an upper ring face, a lower ring face, an outer ring face, an inner ring face and first- and second engaging end portions at a ring partition that allows expansion and contraction of the top piston ring, the first engaging end portion comprising a circumferentially extending finger, the second engaging end portion comprising an circumferentially extending recess shaped and sized for sealingly and slidably receiving the finger, the circumferential extend of the recess being divided in a proximal portion and a distal portion with the proximal portion closest to the ring body, the circumferential extend of the finger being divided in a proximal portion and a distal portion with the proximal portion closest to the ring body, the proximal portion of the recess opening to the outer ring face and to the lower ring face, the distal portion of the recess opening to the outer ring face, to the lower ring face and to the upper ring face, the proximal portion of the finger being flush with the outer ring face and with the lower ring face, at least a radially outer portion of the proximal portion of the finger being flush with the upper ring face, and the distal portion of the finger being flush with the outer ring face and with the lower ring face.

By adding a vertical wall or shoulder in the first engaging end portion flush with the upper face of the top piston ring to the finger and by creating a corresponding recess in the other engaging end portion it is possible to restrict the gas flow in and around the ring partition. Thus, the gas flow, and heat input, is distributed over the whole radius of the top piston ring. This avoids extra heating of the partition area.

In a first possible implementation of the top piston ring the proximal part of the finger is provided with a vertical wall or shoulder that has a face flush with the outer face and with a face flush with the upper ring face.

In a second possible implementation of the top piston ring the second engaging end portion is provided with a recess for receiving the shoulder.

In a third possible implementation of the top piston ring the recess is defined by a horizontal wall and a vertical wall, the vertical wall extending completely to the outer face in the proximal portion of the recess and the vertical wall extending only partially to the outer face in the distal portion of the recess into order to create a recess in which the vertical wall is at least partially received.

In a fourth possible implementation of the top piston ring the recess opens to the inner face and to the outer face.

In a fifth possible implementation of the top piston ring the main ring body is non-circular so that the pressure between and the cylinder liner and the outer face of the top piston ring in the area of the partition is lower than on the remaining circumference of the top piston ring.

In a sixth possible implementation the top piston ring is a temper-hardened casting.

In a seventh possible implementation the top piston ring is coated with a thermal spray coating or with a galvanic coating.

In a eighth possible implementation the top piston ring is provided with at least two controlled leakage grooves for allowing a controlled flow of gas from the combustion chamber to the to the underside of the top piston ring.

In an ninth possible implementation of the top piston ring a horizontal wall projects from said second engaging end portion into said recess. The horizontal wall reinforces and stabilizes the distal portion of the second engaging and portion.

In a tenth possible implementation of the top piston ring the proximal portion of the recess opens only to the outer ring face and to the lower ring face.

In a eleventh possible implementation of the top piston ring the distal portion of the finger is flush only with the outer ring face and with the lower ring face.

Further objects, features, advantages and properties of the engine and method according to the present disclosure will become apparent from the detailed description.

### BRIEF DESCRIPTION OF THE DRAWINGS

In the following detailed portion of the present description, the invention will be explained in more detail with reference to the exemplary embodiments shown in the drawings, in which:
Fig. 1 is a section through a segment of a piston fitted in a cylinder liner showing a ring pack with four piston rings,
Fig. 2 on a larger scale, is a section of a piston fitted in a cylinder liner, showing a ring pack with five piston rings,
Fig. 3 is a plane view of a piston top ring in a loaded condition,
Fig. 4 is a side view of the top piston ring of Fig. 3,
Figs. 5 and 6 show a side view and a top view, respectively, of a segment of the ring of Fig. 3 in the area around a pressure relief groove,
Figs. 7 to 11 are perspective views a piston top ring according to an embodiment of the invention in the area around the partition with Fig. 9 focusing on one engaging end portion and Fig. 10 focusing on the other engaging end portion, and
Figs. 12 to 14 are perspective views a piston top ring according to anther embodiment of the invention in the area around the partition

### DETAILED DESCRIPTION OF PREFERRED EMBODIMENTS

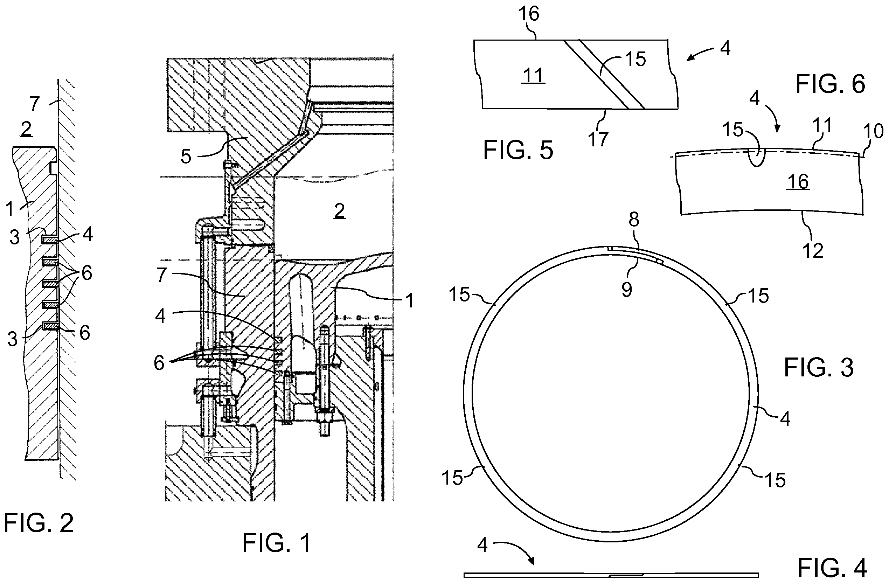

Figs. 1 and 2 show a piston 1, the cylindrical side wall of which is provided with several ring grooves 3, of which the top groove 3 receives a piston top ring 4 and the lower piston rings 6 have been inserted in the lower grooves 3. The top piston ring 4 and the lower piston rings 4,6 of a single piston 1 form a so-called ring pack of cooperating piston rings 4,6. The piston 1 is of a large two-stroke turbo-charged uniflow-scavenged engine with crossheads and the piston 1 defines together with the cylinder liner 7 and the cylinder cover 5 a combustion chamber 2 (it is noted that Fig. 1 does not show an valve exhaust valve in the cylinder cover 5 but it is understood that an exhaust valve will be present in the engine).

The piston rings 4,6 prevent the gas pressure in the combustion chamber 2 from penetrating to the space below the piston 1.

Figs. 3 and 4 illustrate an example embodiment of a top piston ring 4 with a ring partition which substantially prevents gas flow through the partition. The piston top ring 4 has ring body with a partition, which renders it possible partly to expand the ring diameter at the mounting in the ring groove 3, partly to permit two engaging end portions 8,9 of the top piston ring 4 to withdraw from each other as the top piston ring 4 gets worn during use.

As shown in Figs. 5 and 6, the outer side 11 of the ring has in an embodiment four pressure relief four grooves 15, which extend obliquely at an angle a in relation to the plane of the top piston ring 4. The pressure relief grooves which ensure a controlled gas flow from the top side to the lower side of the piston top ring 4, and thus a uniform and suitably delimited gas flow through the individual groove 15.

The outer rim of the ring groove 3 is indicated by dashed lines 10. An outer face 11 of the top piston ring 4 is in contact with a cylinder liner not shown in this drawing.

In another embodiment, the top piston ring 4 is not provided with pressure relief grooves and the pressure relief function is e.g. provided by grooves in the piston (not shown). It is also possible to operate the top piston ring 4 without controlled leakage, i.e. a gas tight top piston ring 4 that handles substantially the complete pressure difference over the piston 1.

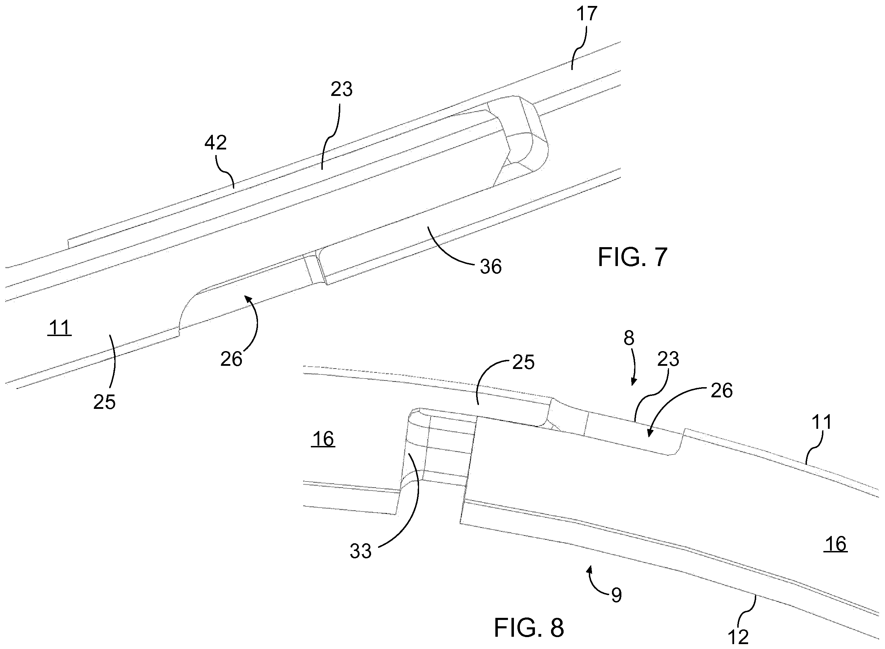

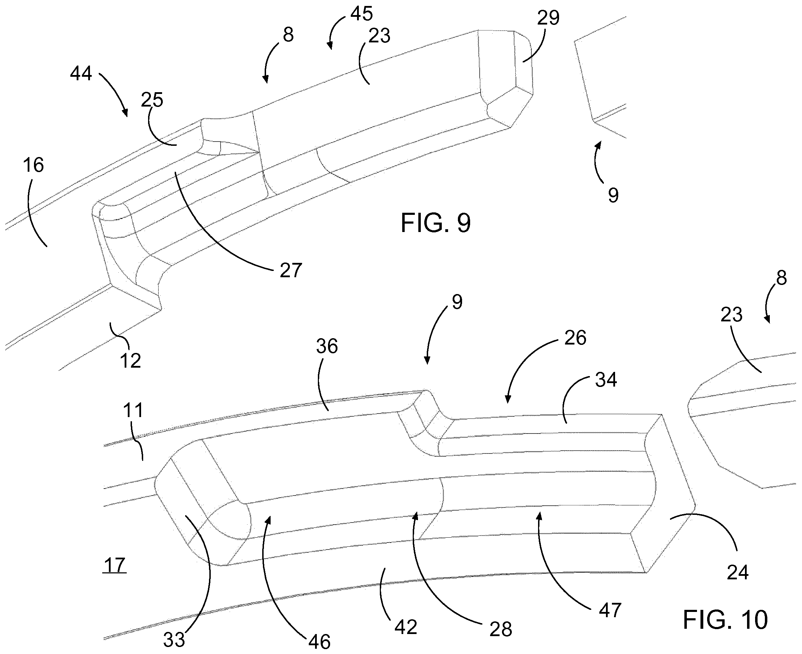

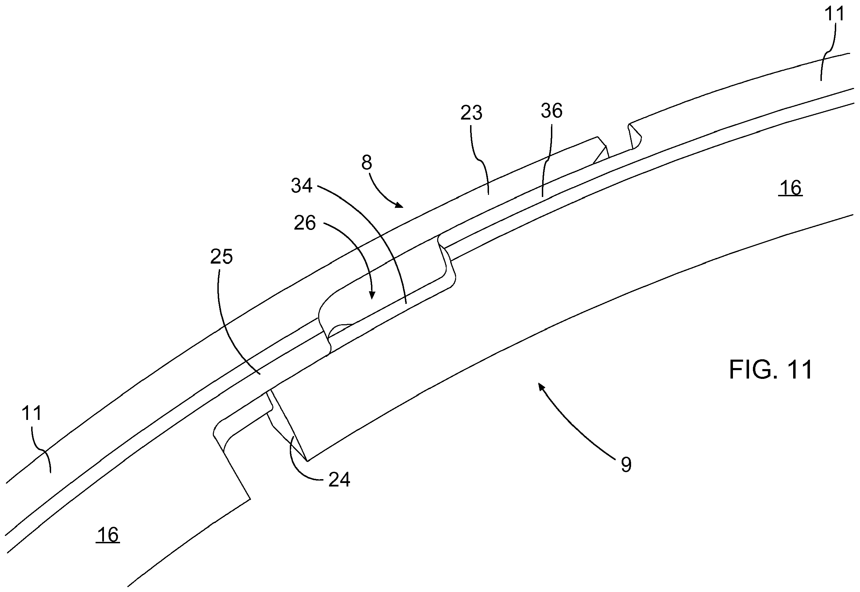

As shown in Figs. 7 to 11, one end portion 8 of the top piston ring 4 has a circumferentially extending finger 23 projecting into a substantially corresponding circumferentially extending recess 28 at the other end portion 9 of the top piston ring 4. The circumferentially extending recess 28 is shaped and sized for sealingly and slidably receiving the finger 23.

In the radial direction, the finger 23 is smaller than the top piston ring 4, and the recess 28 is delimited at the inner side of the top piston ring 4 by a vertical wall 42 abutting the inner side of the tongue 23.

The axial height of the tongue 23 is smaller than the ring height, and the recess 28 is upwardly delimited by a horizontal wall 36, the lower side of which abuts the upper side of the finger 23. As the finger 23 fills out the recess 28 in the directions of width and height, the combustion gases are substantially prevented from flowing through the cut to the space below the piston 1, whether or not the end face 29 of the finger 23 is spaced from the end face 33 of the recess 28 in the circumferential direction.

The circumferential extend of the recess 28 is divided in a proximal portion 46 and a distal portion 47 with the proximal portion 46 closest to the ring body.

The circumferential extend of the finger 23 is divided in a proximal 44 portion and a distal portion 45 with the proximal portion 44 closest to the ring body.

The proximal portion 46 of the recess 28 opens substantially only to the outer ring face 11 and to the lower ring face 17. The proximal portion 46 of the recess is delimited by vertical wall 42 and by horizontal wall 36. In the circumferential direction of the recess 28 is delimited by the end wall 33.

In the embodiment shown in Figs. 7 to 11 the recess 28 is extended by a recess 26 in the circumferentially distal portion 47 of the second engaging end portion. The recess 26 opens to the top face 16 and to the outer face 11 and connects to the recess 28. Thereby, the distal portion 47 of the recess 28 opens to the outer ring face 11, to the lower ring face 17 and to the upper ring face 16. A horizontal wall 34 projects from the vertical wall 42 up to the recess 26 in the circumferentially distal portion 47 of the recess 28. The horizontal wall 34 reinforces and stabilizes the distal portion of the second engaging end portion 9.Thus, the recess 28 is defined by a vertical wall 42 and a horizontal wall 34,36. The horizontal wall 36 extends completely to the outer face 11 in the proximal portion 46 of the recess 28 whilst the horizontal wall 34 extends only partially to the outer face 11 in the distal portion 47 of the recess 28 into order to create a recess 26 in which the vertical wall 25 is at least partially received.

The proximal portion 44 of the finger 23 has an axial height that is at least in an outer part of the radial extend of the proximal portion 44 of the finger 23 equal to ring height, thereby rendering the proximal potion 44 of the finger 23 flush with the outer ring face 11, with said lower ring face 17 and at least partially with said upper ring face 16, thereby forming an upright wall 25. The upright wall 25 forms an additional finger that fills out the recess 26 in in the directions of width and height, thereby forming an additional barrier to the gas flow through the partition. In particular, a flow through the partition to the inner side of the top piston ring 4 is prevented by the overlap between the vertical wall 25 and the face 34 created by recess 26 and abutting with the radially inner face 27 of the upright wall 25.

The distal portion 45 of the finger 23 is flush substantially only with the outer ring face 11 and with the lower ring face 17. The distal portion 45 of the finger 23 thus has a height that is less than the height of the ring body and a width that is less than that of the ring body. The inner wall and the upper wall of the distal portion of the finger 23 sealingly and slidably engage/abut in the horizontal wall 36 and the vertical wall 42 of the second engaging and portion 9.

The ring partition construction with one end portion with a protruding finger 23 that has a proximal portion 44 with a height equal to the axial height of the ring body and a distal portion 45 with a height less than the axial height of the ring body in combination with a matching recess in the other end portion 9 renders the ring partition substantially gastight and presents increased head load on the engaging end portions.

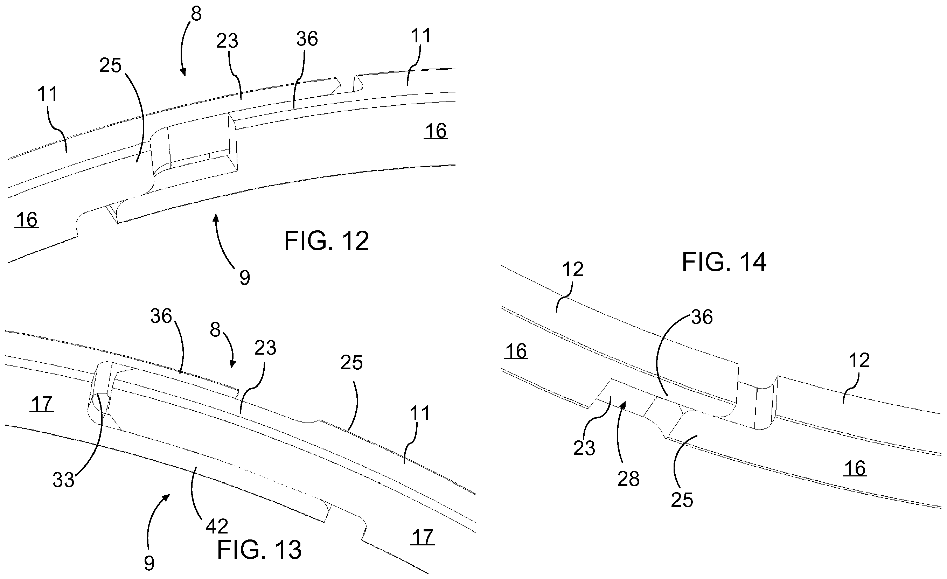

Figs. 12 to 14 show another embodiment of the top piston ring 4, that is essentially identical to the embodiment described with reference to Figs. 7 to 11, except that the proximal portion 44 of the finger 23 of the first engaging end portion 8 has the same height as the ring height over the complete radial extend of the proximal portion 44 of the finger, thus forming a shoulder 25 as opposed to a vertical wall. The recess 26 is accordingly wider to accommodate the shoulder 25.

Typically, all piston rings 4,6 in a pack are manufactured to be non-circular. This non-circular form is required so that the piston ring exerts an exactly defined pressure over the whole ring circumference when inserted in the circular cylinder liner 7. This pressure can in principle be distributed evenly over the circumference; however, a negative oval form is generally aimed for in a top piston 4 for use a piston 1 of a large two-stroke turbo charged uniflow-scavenged internal combustion engine. This means that the pressure in the area of the partition is lower than on the remaining circumference which avoids increased pressure on the partition during operation of the engine.

In an embodiment the top piston ring 4 is a temper-hardened casting with inclusions of vermicular graphite for use in the first groove, while in the lower grooves, piston rings of a non-hardened alloyed casting with lamellar graphite.

In an embodiment the top piston rings 4 is coated with a thermal spray coatings or with a galvanic coating. In an embodiment the top piston ring 4 has an asymmetric convex running surface (outer face) profile.

In an embodiment a ring pack comprises:
- a top ring: asymmetrically barreled, twin layer coated, side face chromium coated,
- a 2^{nd} ring asymmetrically barreled, running-in coated, side face chromium coated,
- a 3^{rd} ring asymmetrically barreled, running-in coated, and
- a 4^{th} ring asymmetrically barreled, twin layer coated.

In another embodiment a ring pack comprises:
- a top ring: asymmetrically barrelled, side face chrome ceramic coated,
- lower rings: asymmetrically barreled, chrome ceramic coated.

The term "comprising" as used in the claims does not exclude other elements or steps. The term "a" or "an" as used in the claims does not exclude a plurality. The single processor or other unit may fulfill the functions of several means recited in the claims.

Although the present invention has been described in detail for purpose of illustration, it is understood that such detail is solely for that purpose, and variations can be made therein by those skilled in the art without departing from the scope of the claims.

## Claims

1. A top piston ring (4) for use in a piston ring pack together with a plurality of lower piston rings (6) in respective annular ring grooves (3) in the side wall of a piston (1) of a large two-stroke turbo charged uniflow-scavenged internal combustion engine with crossheads to seal against the pressure in the combustion chamber (2) above said piston (1), said top piston ring (4) comprising:
a ring body with an upper ring face (16), a lower ring face (17), an outer ring face (11), an inner ring face (12) and first- and second engaging end portions (8,9) at a ring partition that allows expansion and contraction of said top piston ring **characterized in that**:
said first engaging end portion (8) comprises a circumferentially extending finger (23),
said second engaging end portion (9) comprises a circumferentially extending recess (28) shaped and sized for sealingly and slidably receiving said finger (23),
the circumferential extent of said recess (28) is divided in a proximal portion (46) and a distal portion (47) with the proximal portion (46) closest to said ring body,
the circumferential extent of said finger (23) is divided in a proximal portion (44) and a distal portion (47) with the proximal portion closest to said ring body,
the proximal portion (46) of said recess opening to said outer ring face (11) and to said lower ring face (17),
the proximal portion (46) of said recess opening to said outer ring face (11) and to said lower ring face (17),
the distal portion (47) of said recess opens to said outer ring face (11), to said lower ring face (17) and to said upper ring face (16),
the proximal portion (44) of said finger (23) is flush with said outer ring face (11) and with said lower ring face (17),
at least a radially outer portion of said proximal portion of said finger (23) is flush with said upper ring face (16), and
the distal portion (45) of said finger (23) is flush with said outer ring face (11) and with said lower ring face (17).

2. A top piston ring according to claim 1, wherein said proximal part of said finger (23) is provided with a vertical wall (25) that has a face flush with said outer face (11) and with a face flush with said upper ring face (16) .

3. A top piston ring according to claim 2, wherein said second engaging end portion (9) is provided with a recess (26) for receiving said vertical wall (25).

4. A top piston ring according to claim 2 or 3, wherein said recess (28) is defined by a vertical wall (42), a first horizontal wall (36) and a second horizontal wall (34), said first horizontal wall (36) extending completely to the outer face (11) in the proximal portion (46) of the recess (28) and said second horizontal wall (34) extending only partially to the outer face (11) in the distal portion (47) of the recess (28) in order to create a recess (26) in which said vertical wall (25) is at least partially received.

5. A top piston ring (4) according to claim 4, wherein said recess (26) opens to said inner face (16) and to said outer face (11).

6. A top piston ring (4) according to any one of claims 1 to 5, wherein said main ring body is non-circular so that the pressure between and the cylinder liner and the outer face of the top piston ring in the area of the partition is lower than on the remaining circumference of the top piston ring.

7. A top piston ring (4) according to any one of claims 1 to 6, wherein said top ring is a temper-hardened casting.

8. A top piston ring (4) according to any one of claims 1 to 7, wherein said top piston rings (4) is coated with a thermal spray coating or with a galvanic coating.

9. A top piston ring (4) according to any one of claims 1 to 8, wherein said top piston ring (4) is provided with at least two controlled leakage grooves (15) for allowing a controlled flow of gas from the combustion chamber (8) to the to the underside of the top piston ring (7).

10. A top piston ring (4) according to any one of claims 1 to 9, wherein said proximal portion (46) of said recess opens only to said outer ring face (11) and to said lower ring face (17).

11. A top piston ring (4) according to any one of claims 1 to 10, wherein the distal portion (45) of said finger (23) being flush only with said outer ring face (11) and with said lower ring face (17).

## Patentansprüche

1. Oberer Kolbenring (4) zur Verwendung in einem Kolbenringpaket zusammen mit einer Vielzahl an unteren Kolbenringen (6) in jeweiligen ringförmigen Nuten (3) in der Seitenwand eines Kolbens (1) einer großen turboaufgeladenen längsgespülten Zweitakt-Brennkraftmaschine mit Kreuzköpfen, um gegen den Druck in der Brennkammer (2) über dem Kolben (1) abzudichten, wobei der obere Kolbenring (4) Folgendes aufweist:
einen Ringkörper mit einer oberen Ringfläche (16), einer unteren Ringfläche (17), einer äußeren Ringfläche (11), einer inneren Ringfläche (12) und einem ersten und einem zweiten Eingriffsendabschnitt (8, 9) an einer Ringteilung, die Erweiterung und Zusammenziehen des oberen Kolbenrings gestattet, **dadurch gekennzeichnet, dass**:
der erste Eingriffsendabschnitt (8) einen sich umlaufend erstreckenden Finger (23) aufweist,
der zweite Eingriffsendabschnitt (9) eine sich umlaufend erstreckende Aussparung (28) aufweist, die dahingehend geformt und bemessen ist, den Finger (23) abdichtend und gleitbar aufzunehmen,
die umlaufende Erstreckung der Aussparung (28) in einen proximalen Abschnitt (46) und einen distalen Abschnitt (47) geteilt ist, wobei der proximale Abschnitt (46) am nächsten zu dem Ringkörper ist,
die umlaufende Erstreckung des Fingers (23) in einen proximalen Abschnitt (44) und einen distalen Abschnitt (47) geteilt ist, wobei der proximale Abschnitt am nächsten zu dem Ringkörper ist,
sich der proximale Abschnitt (46) der Aussparung zu der äußeren Ringfläche (11) und der unteren Ringfläche (17) öffnet,
sich der distale Abschnitt (47) der Aussparung zu der äußeren Ringfläche (11), zu der unteren Ringfläche (17) und zu der oberen Ringfläche (16) öffnet,
der proximale Abschnitt (44) des Fingers (23) mit der äußeren Ringfläche (11) und mit der unteren Ringfläche (17) bündig ist,
mindestens ein radial äußerer Abschnitt des proximalen Abschnitts des Fingers (23) mit der oberen Ringfläche (16) bündig ist, und
der distale Abschnitt (45) des Fingers (23) mit der äußeren Ringfläche (11) und mit der unteren Ringfläche (17) bündig ist.

2. Oberer Kolbenring nach Anspruch 1, wobei der proximale Abschnitt des Fingers (23) mit einer vertikalen Wand (25) versehen ist, die eine Fläche aufweist, die mit der äußeren Fläche (11) bündig ist, und mit einer Fläche, die mit der oberen Ringfläche (16) bündig ist.

3. Oberer Kolbenring nach Anspruch 2, wobei der zweite Eingriffsendabschnitt (9) mit einer Aussparung (26) zum Aufnehmen der vertikalen Wand (25) versehen ist.

4. Oberer Kolbenring nach Anspruch 2 oder 3, wobei die Aussparung (28) durch eine vertikale Wand (42), eine erste horizontale Wand (36) und eine zweite horizontale Wand (34) definiert ist, wobei sich die erste horizontale Wand (36) komplett zu der äußeren Fläche (11) in dem proximalen Abschnitt (46) der Aussparung (28) erstreckt und sich die zweite horizontale Wand (34) nur teilweise zu der äußeren Fläche (11) in dem distalen Abschnitt (47) der Aussparung (28) erstreckt, um eine Aussparung (26) zu erzeugen, in der die vertikale Wand (25) zumindest teilweise aufgenommen ist.

5. Oberer Kolbenring (4) nach Anspruch 4, wobei sich die Aussparung (26) zu der inneren Fläche (16) und zu der äußeren Fläche (11) öffnet.

6. Oberer Kolbenring (4) nach einem der Ansprühe 1 bis 5, wobei der Hauptringkörper nicht kreisförmig ist, so dass der Druck zwischen der Zylinderlaufbuchse und der äußeren Fläche des oberen Kolbenrings in dem Bereich der Teilung niedriger ist als auf dem restlichen Umfang des oberen Kolbenrings.

7. Oberer Kolbenring (4) nach einem der Ansprüche 1 bis 6, wobei der obere Ring ein wärmegehärtetes Gussstück ist.

8. Oberer Kolbenring (4) nach einem der Ansprüche 1 bis 7, wobei der obere Kolbenring (4) mit einer thermischen Spritzbeschichtung oder mit einer galvanischen Beschichtung beschichtet ist.

9. Oberer Kolbenring (4) nach einem der Ansprüche 1 bis 8, wobei der obere Kolbenring (4) mit mindestens zwei kontrollierten Leckagen-Nuten (15) versehen ist, um einen kontrollierten Fluss von Gas von der Brennkammer (8) zu der Unterseite des oberen Kolbenrings (7) zu gestatten.

10. Oberer Kolbenring (4) nach einem der Ansprüche 1 bis 9, wobei sich der proximale Abschnitt (46) der Aussparung nur zu der äußeren Ringfläche (11) und zu der unteren Ringfläche (17) öffnet.

11. Oberer Kolbenring (4) nach einem der Ansprüche 1 bis 10, wobei der distale Abschnitt (45) des Fingers (23) nur mit der äußeren Ringfläche (11) und mit der unteren Ringfläche (17) bündig ist.

## Revendications

1. Segment de piston supérieur (4) destiné à être utilisé dans un groupe de segments de piston conjointement avec une pluralité de segments de piston inférieurs (6) dans des rainures de segment annulaires (3) respectives dans la paroi latérale d'un piston (1) d'un grand moteur à combustion interne turbocompressé, à deux temps, de balayage à sens unique pour l'étanchéité à la pression dans la chambre de combustion (2) au-dessus dudit piston (1), ledit segment de piston supérieur (4) comprenant :
un corps de segment avec une face de segment supérieure (16), une face de segment inférieure (17), une face de segment extérieure (11), une face de segment intérieure (12) et des première et deuxième parties d'extrémité d'engagement (8, 9) à une séparation de segment qui permet l'expansion et la contraction dudit segment de piston supérieur, **caractérisé en ce que** :
ladite première partie d'extrémité d'engagement (8) comprend un doigt à extension circonférentielle (23),
ladite deuxième partie d'extrémité d'engagement (9) comprend un évidement à extension circonférentielle (28) formé et dimensionné pour recevoir ledit doigt (23) de façon étanche et coulissante,
l'extension circonférentielle dudit évidement (28) est divisée en une partie proximale (46) et une partie distale (47) avec la partie proximale (46) la plus proche dudit corps de segment,
l'extension circonférentielle dudit doigt (23) est divisée en une partie proximale (44) et une partie distale (47) avec la partie proximale la plus proche dudit corps de segment,
la partie proximale (46) dudit évidement ouvrant vers ladite face de segment extérieure (11) et ladite face de segment inférieure (17),
la partie distale (47) dudit évidement ouvre vers ladite face de segment extérieure (11), vers ladite face de segment inférieure (17) et vers ladite face de segment supérieure (16),
la partie proximale (44) dudit doigt (23) affleure avec ladite face de segment extérieure (11) et avec ladite face de segment inférieure (17),
au moins une partie radialement extérieure de ladite partie proximale dudit doigt (23) affleure avec ladite face de segment supérieure (16), et
la partie distale (45) dudit doigt (23) affleure avec ladite face de segment extérieure (11) et avec ladite face de segment inférieure (17).

2. Segment de piston supérieur selon la revendication 1, dans lequel ladite partie proximale dudit doigt (23) est dotée d'une paroi verticale (25) qui a une face qui affleure avec ladite face extérieure (11) et avec une face qui affleure avec ladite face de segment supérieure (16).

3. Segment de piston supérieur selon la revendication 2, dans lequel ladite deuxième partie d'extrémité d'engagement (9) est dotée d'un évidement (26) pour recevoir ladite paroi verticale (25).

4. Segment de piston supérieur selon la revendication 2 ou 3, dans lequel ledit évidement (28) est défini par une paroi verticale (42), une première paroi horizontale (36) et une deuxième paroi horizontale (34), ladite première paroi horizontale (36) s'étendant complètement vers la face extérieure (11) dans la direction proximale (46) de l'évidement (28) et ladite deuxième paroi horizontale (34) s'étendant uniquement partiellement vers la face extérieure (11) dans la partie distale (47) de l'évidement (28) afin de créer un évidement (26) dans lequel ladite paroi verticale (25) est au moins partiellement reçue.

5. Segment de piston supérieur (4) selon la revendication 4, dans lequel ledit évidement (26) ouvre vers ladite face intérieure (16) et vers ladite face extérieure (11).

6. Segment de piston supérieur (4) selon l'une quelconque des revendications 1 à 5, dans lequel ledit corps de segment principal est non-circulaire de façon à ce que la pression entre le revêtement de vérin et la face extérieure du segment de piston supérieur dans la zone de la séparation soit inférieure à celle sur la circonférence restante du segment de piston supérieur.

7. Segment de piston supérieur (4) selon l'une quelconque des revendications 1 à 6, dans lequel ledit segment supérieur est un coulage durci par trempe.

8. Segment de piston supérieur (4) selon l'une quelconque des revendications 1 à 7, dans lequel ledit segment de piston supérieur (4) est revêtu par un revêtement par pulvérisation thermique ou un revêtement galvanique.

9. Segment de piston supérieur (4) selon l'une quelconque des revendications 1 à 8, dans lequel ledit segment de piston supérieur (4) est doté d'au moins deux rainures de fuite contrôlées (15) pour permettre un écoulement contrôlé de gaz venant de la chambre de combustion (8) vers la sous-face du segment de piston supérieur (7).

10. Segment de piston supérieur (4) selon l'une quelconque des revendications 1 à 9, dans lequel ladite partie proximale (46) dudit évidement ouvre uniquement vers ladite face de segment extérieure (11) et vers ladite face de segment inférieure (17).

11. Segment de piston supérieur (4) selon l'une quelconque des revendications 1 à 10, dans lequel la partie distale (45) dudit doigt (23) affleure uniquement avec ladite face de segment extérieure (11) et avec ladite face de segment inférieure (17).
